# EUROPEAN PATENT APPLICATION

(11) **EP 3 248 504 A1**
(43) Date of publication of application: **29.11.2017**
(21) Application number: 17397513.7
(22) Date of filing: 24.05.2017
(51) Int. Cl.: A47B 91/00, A47C 7/00, F16M 11/24, A47B 13/02

(54) **FURNITURE BASE ASSEMBLED FROM SEVERAL PARTS**

(30) Priority: 25.05.2016 FI 20165438
(71) Applicant: AF Solutions Ab Oy, 68620 Jakobstad (FI)
(72) Inventor: KJELLMAN, Fredrik, 68660 Jakobstad (FI)
(74) Representative: Seppo Laine Oy

(57) **Abstract**

The invention is directed to a base for pieces of furniture having at least one supporting column structure. The base comprises a central hub (2) receiving the lower end of a column and a number of arms (1) radiating from the hub. The object of the invention is to provide a furniture base which allows varying its height. This is accomplished by changing the angle between hub and arms, or by shifting the points of attachment of the arms on the hub in the vertical direction.

## Description

The invention is directed to a base for pieces of furniture having at least one supporting column structure. More specifically, the invention is directed to a base assembled from a plurality of parts, comprising a hub and arms radiating therefrom.

### Background

Chairs having a central column are popular in particular as office chairs, but also for private use when a there is a need for a chair which is rotatable while stationary. Such chairs may be provided with various mechanisms for rotation, tilting, gas or spring suspension in the column, among others. A prerequisite for such a chair is a robust base structure, with or without wheels for moving around.

Also tables may be provided with one or more columns, for example along a central line, whereby the legs are not in the way of persons seated around the table. A centrally located column is not required e.g. on desk-type furniture.

For furniture which is to be stationary, a flat base plate may be employed. In particular for chairs with wheels, a star-shaped base is mostly used, having a central hub receiving the lower end of a column and a number of arms radiating from the hub. This structure provides a multitude of options for esthetically appealing designs for the base.

The number of arms may vary, but the great majority of chairs are designed with five arms.

The conventional solution for producing a steady and robust furniture base is to manufacture it in one piece, for example by molding using plastic or metal. Assembly by welding is another option. Thereby, the arms are often tubular. Such a furniture base, however, requires a disproportional amount of space during transport. The logistics currently involved in the transport of bulk items requires careful optimization, and there is a need for achieving the closest possible packing. During manufacturing, fairly bulky equipment is required for e.g. chrome plating, paint coating or other surface treatment of a single-piece furniture base.

Fixing wooden arms of a furniture base to a metal hub using various screw fastening methods is known in the art.

### Summary of the invention

The object of the present invention is to provide a furniture base which allows varying its height. This is accomplished by changing the angle between hub and arms, or by shifting the points of attachment of the arms on the hub in the vertical direction.

The furniture base according to the present invention is less bulky in transport and coating operations than prior art designs, and may be advantageously produced in a manner allowing great flexibility as regards the visual appearance. A further object of the invention is to provide assembly solutions in which the screws are essentially invisible when the product is in use.

In US patent application publication No. 2015/0122958, a chair base structure is disclosed which is assembled from a molded hub and molded arms which are fitted to the hub using connections with interlocking shapes. Further, a prior art structure is disclosed in which a four-armed base is assembled from two crossing tubes attached to a flat plate on which the hub stands.

In US patent application publication No. 2005/0258320 is disclosed a chair base structure having overlaying cover parts allowing visual variation.

In German application publication DE 102008032527 is disclosed a chair base structure, in which the arms are collapsible so as to set in an essentially parallel axial position In the following are defined expressions for describing the type of furniture base to which the invention relates.

The hub is a body which is located centrally in the base and may be cylindrical or have a number of flat sides, the amount of which usually corresponds to the number of radiating arms. The hub may be tubular or conical, and in chair bases it is preferably provided with a cavity for receiving a swivel, which allows rotation of the column structure which supports the seat of the chair, or for receiving the lower end of the column in a nonrotating structure.

The axial direction is the direction of the vertical central axis of the hub.

A radial direction is a direction perpendicular to the axial direction, essentially in the horizontal plane. Depending on the structure, deviations from the horizontal may occur.

Up and down refer to the directions when the furniture base is in its operational position, also called the assembled state.

The proximal end of an arm is the end closest to the hub. The distal end is thus the opposite end which rests on the floor.

The present invention allows the assembly of a furniture base having variable height without using welding. In a preferable embodiment, the arms are provided with end flanges with holes for radially directed screws. The holes are located close to the lower edge of the flange, and the upper edge of the proximal end of the arm abuts the hub. Spacers having varying thickness between said upper edge and the hub may be used for varying the angle between arm and hub, and thus for varying the height of the furniture base.

In a further embodiment, the arms are joined to the hub using pivots which are situated closer to the lower edge of the arm than the upper edge. Thereby the arms may be folded down to an essentially parallel position, their longitudinal direction being essentially in the axial direction. The joint may be a rivet or bolt running through the arm structure and the hub protrusion. When the furniture base is set in its operational position, the arms are folded out umbrella-wise to point essentially in the radial direction. The arms may be fixed in this position using screws, or optionally the joint structure may be provided with a friction lock. By placing spacers or corresponding means between the hub and the upper edge of the proximal end of the arms, the angle of the arms and thus the height of the furniture base may be changed.

In a further embodiment for the variable attachment of the hub, a circular disc having a thickness exceeding the diameter of the fastening screws for the arms is adapted for fitting into the hub in a horizontal position. In the disc are provided radial, threaded holes for receiving the screws. The tubular hub may be provided with series of through holes at varying heights, or alternatively with longitudinal openings for the screws, whereby the vertical position of the points of attachment for the arms may be varied. The disc having radial screw holes is shifted within the hub to a desired vertical position, after which the screws are set through end flanges of the arms and through the corresponding holes or longitudinal openings on the desired level in the hub. Thus, no parts need to be welded to the tubular hub, but the unit is assembled using screw joints only.

According to the present invention, each arm is separately produced of metal or plastic and individually attached to the hub by means of at least one screw, bolt or rivet per arm. This makes possible the transport of arms and hub in a space considerably smaller than that required for a furniture base manufactured as a single piece.

According to an aspect of the invention, the invention is directed to a furniture base assembled from a hub and a plurality of arms fastened to the hub using at least one screw, bolt or rivet per arm.

According to another embodiment, the arms are fastened to the hub using a joint allowing the direction of the arms downwards e.g. for the purpose of transport. The arms may thereby be essentially parallel. When assembling to the operational position, the arms are folded out and fixed in the state required when the furniture is in use.

According to a preferable embodiment, the arms are manufactured by bending sheet metal, preferably steel sheet, the thickness of which may advantageously be 2 mm. The arm is bent to a U or C profile and can preferably be subsequently bent to be given a longitudinal curvature. This curvature may be concave or convex relative to the operational position. The profile may be open downwards or upwards relative to the position of the arm in the completed furniture base. When the embodiment having the upward open profile is used, the cavity may be covered using cover plates of various materials which may differ from the material of the arm. Thus, great variation in e.g. color and surface structure is possible.

In the embodiments where the arms are kept separate from the hub during transport, the fastening of hub and arms may be carried out in several ways. In a preferable embodiment, the proximal and of the arm is provided with a welded flange which is parallel to the wall of the hub, and is thus essentially vertical in the assembled position. In the flange is provided at least one hole for a screw which engages a radial threaded hole in the hub. When the arm is designed as a U- or C-profile, the flange is preferably inside the profile. The flange preferably has a shape corresponding to the surface on the hub to which it connects.

The arms of a furniture base according to the present invention may preferable be manufactured from bent steel sheet material. They may also be cut from thick metal material using e.g. laser. Further they may be molded of aluminum or plastic material; also plastic composite material is possible.

The blanks for the arms are preferably prepared from flat sheet metal using conventional methods such as blanking or shearing using e.g. plasma, laser or water jet.

The invention is described in greater detail below referring to the attached drawings, in which
Fig. 1 is a side view of a preferred embodiment of the invention, in which the arms are prepared from sheet metal bent to a C-profile which is open downwards, and the angle of the arms relative to the hub can be varied;
Fig. 2 shows a preferable embodiment of the invention, in which the arms are attached to the hub so as to be collapsible. A collar between the hub and the upper edges of the proximal ends of the arms provides for adjustment of the angle between the hub and the arms.
Fig. 3 shows the embodiment in Fig. 2 with the arms partly folded:
Fig. 4 is a top view of the embodiment of Fig. 5 with the arms collapsed;
Fig. 5 shows side views of alternative structures for the hub of the embodiment in Fig. 1.

In the figures, all equivalent parts have not been provided with reference numerals when the objects are symmetrical.

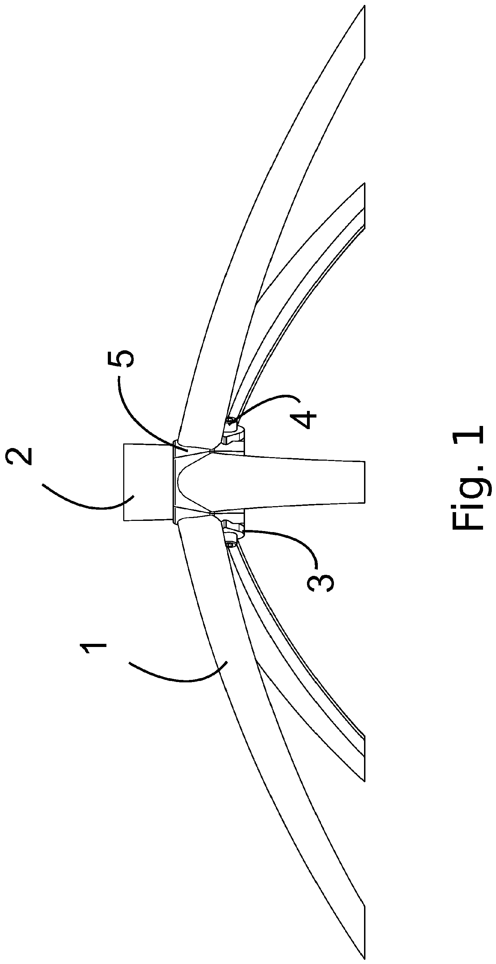

In Fig 1 is depicted a side view of a furniture base according to the invention. The arms 1 are manufactured from steel sheet, whereby blanks have been cut from planar material and initially bent to a U-profile, providing the necessary stiffness, after which a further bending has been carried out to achieve an esthetical curvature. In the figures, this curvature is upward concave throughout, but it may also be the opposite. In the arms are provided end flanges 3 with holes for radially directed screws 4. The holes are located close to the lower edge of the flange, and the upper edge of the proximal end of the arm abuts the hub 2. Here, the hub is cylindrical, i.e. has a circular section. To match the contact area between the planar end flange 3 and the curved surface on the hub 2, a spacer body 5 has been fitted between the surfaces, preferably so that the screw runs through a hole in the body. Spacers having varying thickness in their upper and lower sections may be used for varying the angle between arm and hub, and thus for varying the height of the furniture base.

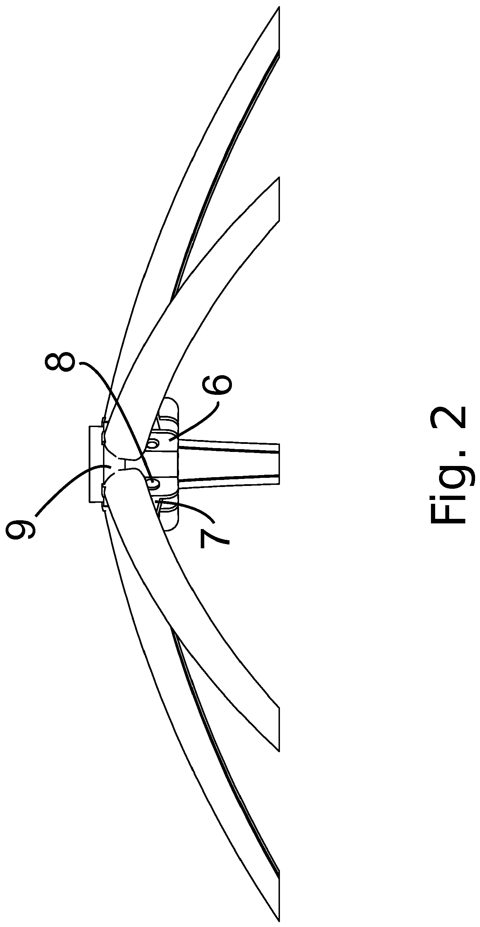

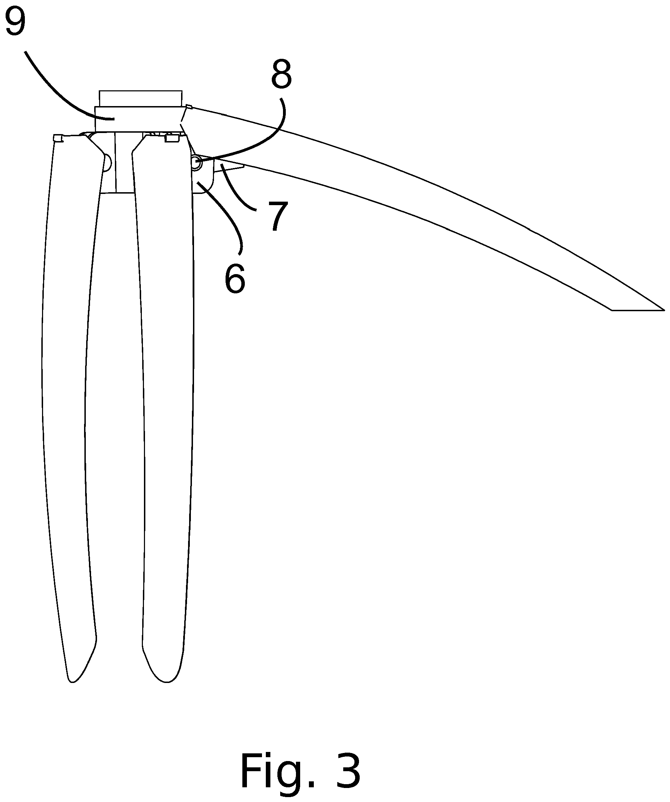

Fig. 2 shows an embodiment where the hub is provided with protrusions 6 arranged in pairs in a star configuration. On the arms are provided welded lugs 7, the outer ends of which are inserted between the pairwise protrusions 6 on the hub. Pivot pins 8, e.g. in the form of rivets or bolts, are arranged through the lugs 7 on the arms and the protrusions 6. Thus, the arms may be folded to lie essentially in the axial direction as shown in Fig. 3 where two arms are swung down and one is swung out. A furniture base collapsed in this manner has a shape making packing and transport relatively easy. When the arms may turn around the pivot pins in this manner, their angle relative to the hub in the operational position may be varied using e.g. spacers between the hub and the upper edge of the proximal ends of the arms. Thus, the height of the furniture base may be varied. Preferably, this is carried out e.g. using a collar 9 or collars on the outside of the hub, the thickness or the rotational position of the collar determining the above-mentioned angle.

The joint structure may also be the inverse to that shown in the figure, i.e. with single protrusions on the hub and pairs of lugs on each arm.

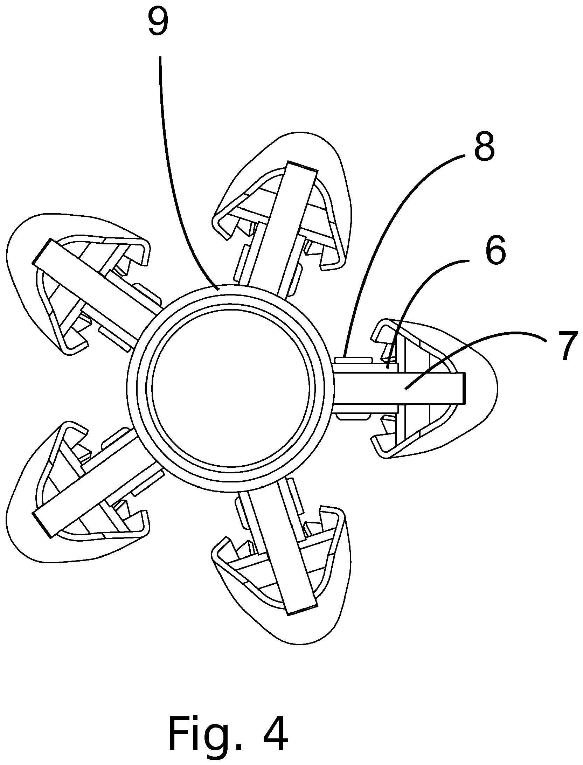

Fig. 4 shows the furniture base of Fig. 2-3 in the collapsed state from above, the parts being indicated as in Figs. 2 and 3.

Figs 2 to 4 show an embodiment with arms worked from sheet metal, but corresponding constructions having pivoting arms may be applied when the arms are produced from other

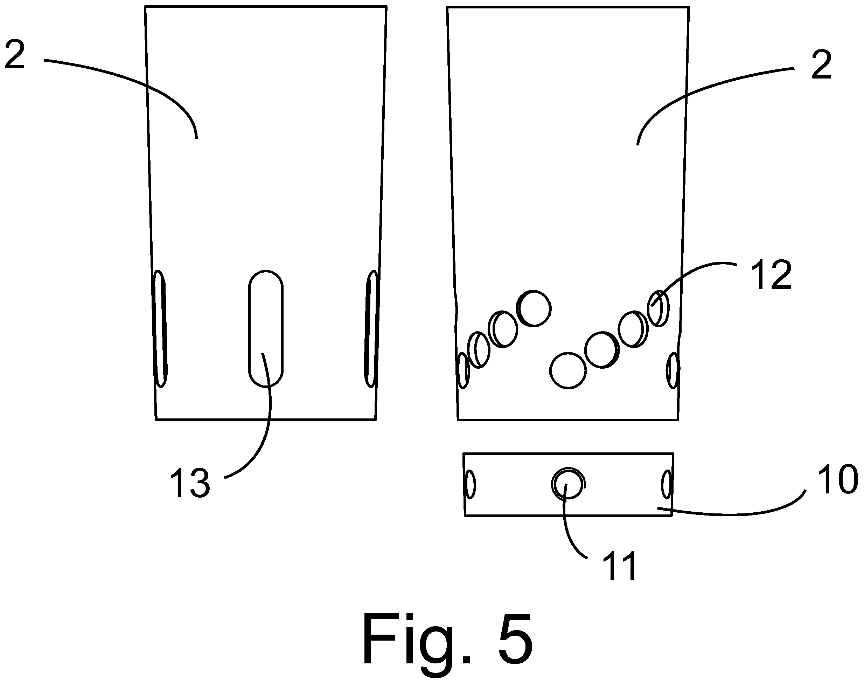

Fig. 5 shows two further alternative embodiments for the variable attachment of arms (not shown) to a hub 2. A circular disc 10 having a thickness exceeding the diameter of the screws (not shown) is adapted for fitting into the hub in a horizontal position. In the disc 10 are provided radial, threaded holes 11 for receiving the screws. The tubular hub may be provided with series of through holes 12 at varying heights, or alternatively with vertically longitudinal openings 13 for the screws, whereby the vertical position of the points of attachment for the arms may be varied. The disc 10 having radial screw holes 11 is set within the hub to a desired vertical position, after which the screws are set through the end flanges of the arms and through the corresponding holes 12 or longitudinal openings 13 on the desired level in the hub, and the screws are tightened against the hub surface. Thus, no parts need to be welded to the tubular hub, but the unit is assembled using screw joints only.

In the distal ends of the arms, base plates for contacting the floor may be provided in particular for embodiments where the arms are of relatively thin sheet metal.

When the arms are made from bent sheet metal, their profile may be set in the opposite direction relative to Figures 1 to 4, i.e. with the cavity upwards. Thereby the cavity may preferably be closed with a covering element. This element may be provided in a material and color of choice, allowing great variety in the appearance of the chair base. One advantage is that welded details and screw joints may be located within the profile so they are hidden by the covering element.

The covers may be fastened e.g. using suitable protrusions on their underside, forming snap-on connections engaging the edges of the C-profile of the arms.

The present invention provides advantages in the manufacturing process, among others. In relation to furniture bases molded in one piece, surface finishing operations like chrome plating, polishing and coating are significantly easier to carry out when the arms are separate, thin and longitudinal objects. Assembly by screwing allows less complicated procedures than e.g. in case the arms and the hub are provided with form-fitting joint components which must be shaped by molding or working.

The features described herein may be combined freely within the scope of the invention as defined in the claims.

## Claims

1. A base for furniture having a supporting column structure comprising a central hub and a plurality of radiating arms, each arm being manufactured as a separate part from metal or plastic and being individually attached to the hub, **characterized in that** the height of the base is variable by means of varying the angle of the arms relative to the hub or the location of the points of attachment of the arms to the hub.

2. A base according to claim 1, **characterized in** each arm being individually attached to the hub by means of at least one screw, bolt or rivet allowing variation of the axial direction of the arm relative to the hub by means of a spacer body between the hub and the upper edge of the proximal end of the arm.

3. A base according to claim 1, **characterized in** each arm being individually attached to the hub by means of at least one screw, bolt or rivet allowing a pivoting motion of the arm relative to the axial direction of the hub, whereby the angle of the arm relative to the axial direction of the body may be varied by means of a spacer body between the hub and the upper edge of the proximal end of the arm.

4. A base according to claim 2 or 3, **characterized in that** the angle of the arm relative to the axial direction of the hub may be varied by means of a collar external to the hub, the thickness or position of which determines said angle.

5. A base according to claim 1, **characterized in** the arms having at their proximal ends a flange with a direction essentially corresponding to the side of the hub or a tangent of the same; the arms are attached to the hub by means of at least one screw in essentially the radial direction of the hub; the hub being tubular and provided with holes at varying heights or alternatively with vertically longitudinal openings; and internally to the hub is fitted an essentially horizontal disk having a thickness exceeding that of the diameter of the screws, the disk having radial threaded holes for receiving the screws; whereby the disk is adapted to be set at varying heights at the holes or the longitudinal openings to allow variation in the vertical location of the arms relative to the hub.

6. A base according to claim 1, **characterized in** the arms being manufactured from bent sheet steel.

7. A base according to claim 6, **characterized in** the arms being bent to a U or C profile which is open downwards.

8. A base according to claim 6, **characterized in** the arms being bent to a U or C profile which is open upwards.

9. A base according to claim 8, **characterized in** the arms being provided with separate cover elements.
